# EUROPEAN PATENT APPLICATION

(11) **EP 4 446 683 A1**
(43) Date of publication of application: **16.10.2024**
(21) Application number: 24158088.5
(22) Date of filing: 16.02.2024
(51) Int. Cl.: F28D 15/02, F28D 15/04, F28F 1/02, F28F 1/04

(54) **POLYGONAL-SHAPED HEAT PIPES**

(30) Priority: 23.03.2023 US 202363454272 P; 08.11.2023 US 202318504928
(71) Applicant: Meta Platforms Technologies, LLC, Menlo Park, CA 94025 (US)
(72) Inventor: Toleno, Brian, Menlo Park (US); Nikkhoo, Michael, Menlo Park (US); Vakhshouri, Kiarash, Menlo Park (US)
(74) Representative: Murgitroyd & Company

(57) **Abstract**

An elongated heat pipe is described. In examples, the heat pipe may include a body comprising a polygonal-shaped cross-section and a RF compatible material, e.g., a ceramic, a polymer, glass, etc. The heat pipe may further include a working fluid disposed within the body.

## Description

### TECHNICAL FIELD

The present disclosure relates generally to heat pipes and vapor chambers and finds particular, although not exclusive, utility in providing heat pipes or vapor chambers that are RF compatible.

### BACKGROUND

Augmented reality/virtual reality (AR/VR) devices have very stringent limitations in available space and weight for thermal management solutions. AR/VR devices generally include antennas and thus AR/VR devices also require radio frequency (RF) compatibility. Additionally, AR/VR devices have more strict touch temperature and power budgets when compared to other devices. Heat pipes and vapor chambers are often used to redirect heat within AR/VR devices.

Existing techniques for manufacturing heat pipes and vapor chambers involve forming a shell or housing (generally of metal), and then inserting a wick structure. This process is time consuming and expensive due to differing materials and multiple different manufacturing and assembly processes that are involved. Additionally, when made of metal (which is currently the most common and least expensive heat pipe or vapor chamber) the heat pipe or vapor chamber may interfere with radio frequency signals, which limits the locations at which these devices can be used in AR/VR devices and other types of electronic devices.

### SUMMARY

According to a first aspect, there is provided a heat pipe comprising: a body comprising a polygonal-shaped cross-section, wherein the body comprises a radio frequency (RF) compatible material comprising one of ceramic, polymer, or glass; and a working fluid disposed within the body.

A diameter of a circle circumscribing the body may be in a range of 800 to 1200 microns.

The RF compatible material may comprise a polymer comprising one or more of poly(methyl methacrylate) (PMMA) based polymers, polysulfone (PSF) based polymers, azobenzene, or polytetrafluoroethylene.

The body may be at least one of (i) transparent to radio frequency (RF) transmissions or (ii) optically transparent.

Surfaces, or at least some of the surfaces, of the body may meet in acute angles. For example, a first surface may meet a second surface at an acute angle.

The body may comprise one of a triangular cross-section, a star-shaped cross-section, a square-shaped cross section, a trapezoidal cross-section, a rhomboid-shaped cross-section, or a hexagonal cross-section.

The working fluid may comprise at least one of water, acetone, ammonia, glycol/water solution, dielectric coolants, alcohol, liquid nitrogen, mercury, magnesium, potassium, sodium, lithium, silver, or methanol.

According to a second aspect, there is provided a wearable device comprising one or more electronic components, wherein the one or more electronic components include at least one heat pipe, wherein the at least one heat pipe comprises: a body comprising a polygonal-shaped cross-section; and a working fluid disposed within the body.

A diameter of a circle circumscribing the body may be in a range of 800 to 1200 microns.

The body may comprise a radio frequency (RF) compatible material.

The RF compatible material may comprise one of ceramic, polymer, or glass.

The RF compatible material may comprise a polymer comprising one or more of poly(methyl methacrylate) (PMMA) based polymers, polysulfone (PSF) based polymers, azobenzene, or polytetrafluoroethylene.

The body may be at least one of (i) transparent to radio frequency (RF) transmissions or (ii) optically transparent.

Surfaces, or at least some of the surfaces, of the body may meet in acute angles. For example, a first surface may meet a second surface at an acute angle.

The body may comprise one of a triangular cross-section, a star-shaped cross-section, a square-shaped cross section, a trapezoidal cross-section, a rhomboid-shaped cross-section, or a hexagonal cross-section.

The wearable device may comprise one of augmented reality (AR) glasses, an AR headset, a virtual reality (VR) headset, and a watch.

The wearable device may comprise AR glasses and the heat pipe may be located in temple arms of the AR glasses.

The wearable device may comprise an AR headset and the heat pipe may be located in a frame of the AR headset.

The wearable device may comprise a VR headset and the heat pipe may be located in one or more of a visor of the VR headset, a stack-printed circuit board (PCB) architecture of the VR headset, or one or more optical assemblies of the VR headset.

According to a third aspect, there is provided a method of making a heat pipe, the method comprising: forming a body comprising a polygonal-shaped cross-section wherein the body comprises a radio frequency (RF) compatible material comprising one of ceramic, polymer, or glass; and disposing a working fluid within the body.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIGs. 1A-1H are simplified schematic diagrams of examples of heat pipes and processes of manufacturing the same in accordance with examples of the present disclosure.
FIGs. 2A-2E are simplified schematic diagrams of example structures incorporating a heat pipe, in accordance with examples of the present disclosure.
FIG. 3 illustrates a flow diagram of an example method of manufacturing a heat pipe, in accordance with examples of the present disclosure.

### DETAILED DESCRIPTION

The techniques, systems, and arrangements described herein provide solutions for manufacturing polygonal ceramic or polymeric heat pipes or vapor chambers that are RF compatible, e.g., a material that does not materially attenuate or otherwise interfere with RF signals, i.e., a material that does not interfere with radio signals such as radio signals that are received by and/or emanate from an antenna. By making the heat pipes or vapor chambers polygonal in shape, i.e., having a polygonal-shaped cross-section, the corners promote capillary action, which improves performance relative to cylindrical heat pipes or parallel plate vapor chambers. In examples, the high energy surfaces meet in acute angles, which produces a capillary boost. For example, angles of 45 degrees or less produce an optimal capillary boost. In examples, the more acute the angles, the better the capillary boost.

The techniques, systems, and arrangements described herein provide solutions to effectively transfer heat through AR/VR devices. However, the techniques described herein may be used in connection with any electronic device in which it is desirable to transfer heat from one area to another. By way of example and not limitation, other types of electronic devices in which the techniques, systems, and arrangements described herein can be used include wearable devices such as extended reality devices (e.g., augmented reality, virtual reality, mixed reality, etc.), a head-mounted display (e.g., headset, glasses, helmet, visor, etc.), a suit, a glove (e.g., a haptic glove), a wrist wearable (e.g., watch, wrist band, fitness tracker, etc.), or any combination of these, a handheld electronic device (e.g., tablet, phone, handheld gaming device, controller, etc.), a portable electronic device (e.g., laptop), or a stationary electronic device (e.g., desktop computer, television, set top box, a vehicle electronic device).

This application describes heat pipes, vapor chambers, thermal spreaders, and other thermal solutions (collectively referred to herein as "heat pipes"). Geometries for the heat pipes such as, for example, triangles, are a focus of this application, but other geometries such as, for example, stars, squares, trapezoids, rhomboids, hexagons, or other polygons may take advantage of the capillary boost provided by the sharp angles. The capillary boost may be most pronounced with more actuate angles and thus, shapes such as triangles and star shapes may provide the most capillary boost. In the case of triangles, the triangles may, but need not necessarily be equilateral triangles. In various examples, the triangles may be isosceles, equilateral, scalene, obtuse, acute, and right. In example configurations, heat pipes are described herein that have very high thermal conductivity along the length and may efficiently transfer heat from the concentrated heat sources of an AR/VR device to a colder part of the AR/VR device, thus significantly increasing the available surface area for heat dissipation.

In some examples, the capillary boost provided by the polygonal shape of the heat pipe may be sufficient that a separate wick structure is unnecessary in the heat pipe and may be omitted, thereby further reducing the cost and/or complexity of the heat pipe. However, in some examples, it may still be beneficial to include a wick structure. In some cases, the wick structures or other capillary features may be formed directly on or in the planar surfaces from which the heat pipe shell is formed. For instance, in the case of ceramic, capillary features may be formed directly on to the interior surface of the ceramic during a tape casting process. As is known, tape casting (also referred to as doctor blading, knife coating, and shank shifting) is a casting process used in the manufacture of thin ceramic tapes and sheets from ceramic slurry. The ceramic slurry is cast in a thin layer onto a flat surface and then dried and sintered. It is a part of powder metallurgy. Ceramic heat pipes produced using a tape casting process generally have improved RF transparency and improved intrinsic contact angles thus possibly eliminating any need for a separate hydrophilic coating.

Additionally, or alternatively, for ceramics or other materials, capillary features may be formed on the interior surfaces by laser etching, chemical etching, deposition (e.g., vapor or plasma deposition), or any other suitable means. One of the advantages of some examples of heat pipes described herein is that the enclosure and wick structure, when included, may be formed of a same material and/or during a same manufacturing process.

This application focuses on ceramic, polymer, and glass materials, e.g., RF compatible materials. However, the polygonal shapes are also applicable to metal heat pipes in examples. However, such metal heat pipes are not necessarily RF compatible. For any material, the polygonal heat pipe may be formed as separate stock sheets bonded together (welding, hermetic non-polymeric adhesives, glass frit, etc.). In examples, the cross section may be extruded. In other examples, the cross section may be molded or cast in one or multiple pieces and then bonded (welded/adhered) together. In the case of metal or polymer, the heat pipes or vapor chambers may alternatively be formed by bending a thin sheet into the desired cross-sectional shape and then the seam may be welded.

In examples, a heat pipe may include a body comprising a polygonal-shaped cross-section, where the body comprises a radio frequency (RF) compatible material, and a working fluid within the body. In examples, the RF compatible material comprises one of ceramic, polymer, or glass. In examples, a diameter of a circle circumscribing the body is in a range of 800 to 1200 microns.

In some examples, the RF compatible material comprises a polymer comprising one or more of poly(methyl methacrylate) (PMMA) based polymers, polysulfone (PSF) based polymers, azobenzene, or polytetrafluoroethylene. In some examples, the body comprises a metal.

In some examples, the body is at least one of (i) transparent to radio frequency (RF) transmissions or (ii) optically transparent. In some examples, surfaces of the body meet in acute angles.

In examples, the body comprises one of a triangular cross-section, a star-shaped cross-section, a square-shaped cross section, a trapezoidal cross-section, a rhomboid-shaped cross-section, or a hexagonal cross-section.

In examples, the working fluid comprises at least one of water, acetone, ammonia, glycol/water solution, dielectric coolants, alcohol, liquid nitrogen, mercury, magnesium, potassium, sodium, lithium, silver, or methanol.

In some examples, a wearable device comprises one or more electronic components, where the one or more electronic components include at least one heat pipe such as the heat pipes described above. For instance, in some examples the wearable device comprises AR glasses and the heat pipe is located in temple arms of the AR glasses. In other examples, the wearable device comprises an AR headset and the heat pipe is located in the frame of the AR headset. In some examples, the wearable device comprises a VR headset and the heat pipe is located in one or more of a visor of the VR headset, a stack-printed circuit board (PCB) architecture of the VR headset, or one or more cameras, sensors, displays, and/or light engines of the VR headset.

In some examples, a method of making a heat pipe comprises forming a body comprising a polygonal-shaped cross-section, where the body comprises a radio frequency (RF) compatible material, and where the RF compatible material comprises one of ceramic, polymer, or glass; and disposing a working fluid within the body.

In examples, the body is formed of a ceramic via a tape casting process. In some examples, the method further comprises forming a wick structure, wherein forming the body and forming the wick structure are formed of the same material during the tape casting process.

In examples, forming the body comprising the polygonal-shaped cross-section comprises bonding separate sheets of material together to form the body comprising the polygonal-shaped cross-section. In some examples, bonding the separate sheets of material together comprises one of welding the separate sheets of material together, applying a hermetic adhesive to the separate sheets of material, or using a glass frit bonding process.

In examples, forming the body comprising the polygonal-shaped cross-section comprises extruding the body comprising a polygonal-shaped cross-section. In some examples, forming the body comprising the polygonal-shaped cross-section comprises using a molding process to form the body comprising the polygonal-shaped cross-section.

In examples, forming the body comprising the polygonal-shaped cross-section comprises casting one or more pieces of material and bonding the one or more pieces of material together to form the body comprising the polygonal-shaped cross-section.

In examples, forming the body comprising the polygonal-shaped cross-section comprises bending a sheet of material into the polygonal-shaped cross-section welding a seam of the sheet of material to form the body comprising the polygonal-shaped cross-section.

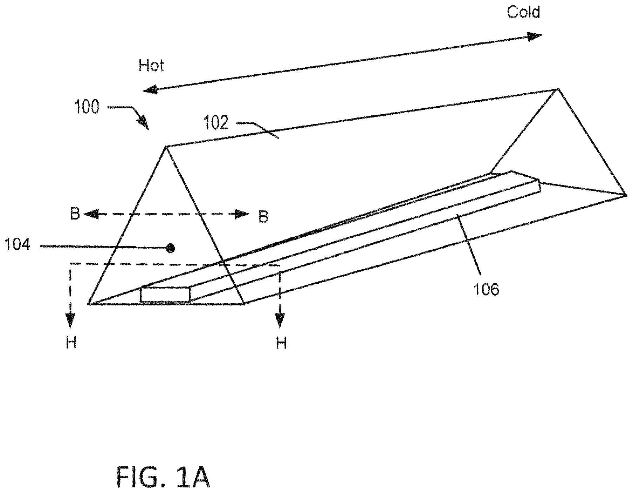

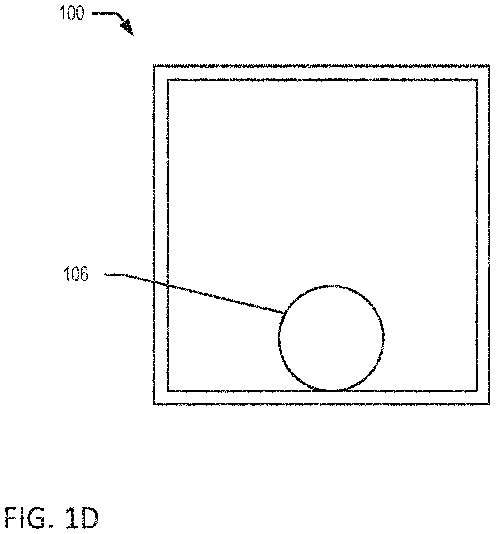

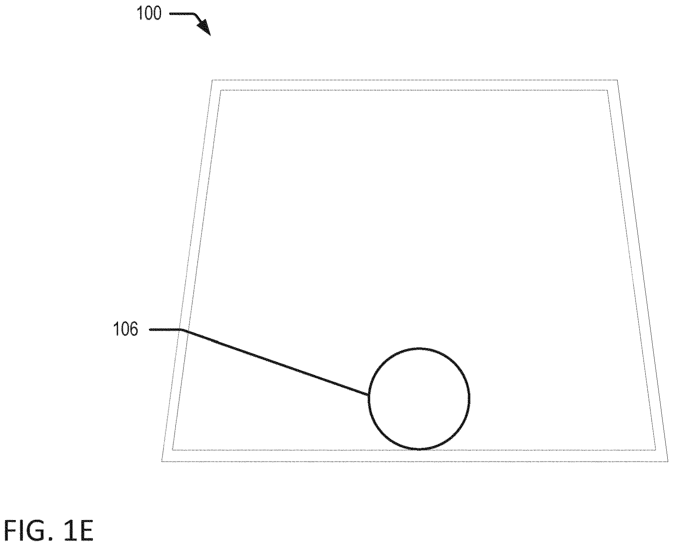

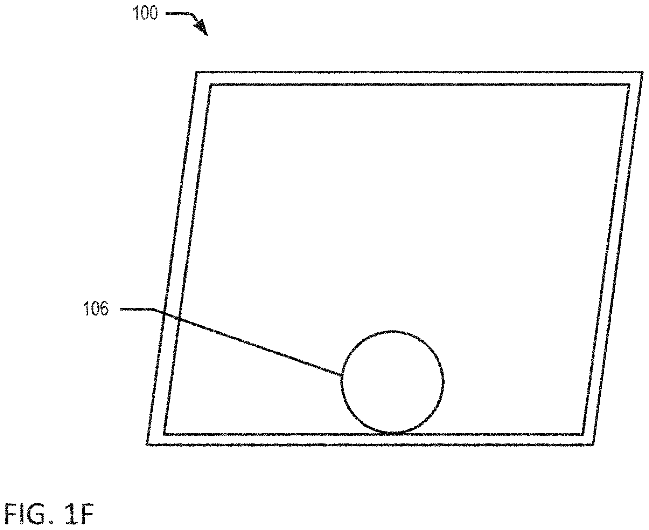

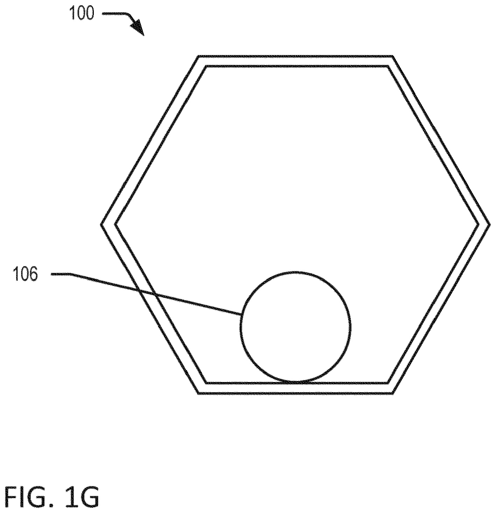

FIGS. 1A-1H schematically illustrate examples of a heat pipe 100. Heat pipe 100 is merely an example and the techniques described herein are applicable to other sizes, shapes and configurations of heat pipes and/or vapor chambers.

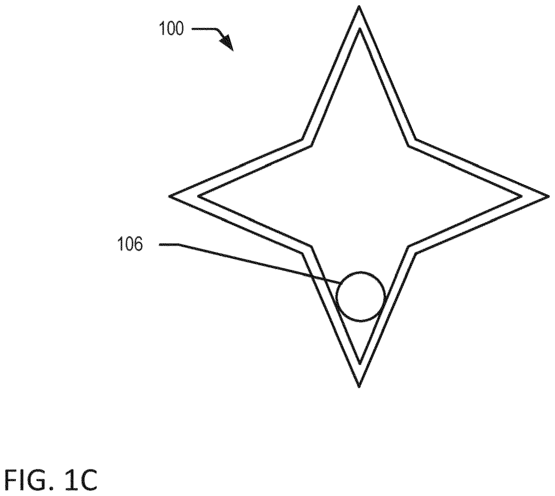

FIG. 1A is a perspective view illustrating the example heat pipe 100 having an elongated body 102. The heat pipe 100 in this example has a generally triangular cross section and is generally straight/linear in an axial or lengthwise direction. However, the heat pipe 100 can be sized and shaped to any desired dimensions for a given design architecture. By way of example and not limitation, heat management components such as heat pipe 100 may have non-triangular cross sections and/or a lengthwise shape of the heat pipe 100 may be nonlinear (e.g., arcuate, curved with continuous or variable radii, etc.). For example, the heat pipe 100 may have a star-shaped cross-section, a square-shaped cross section, a trapezoidal cross-section, a rhomboid-shaped cross-section, or a hexagonal cross-section. FIGs. 1C-1G schematically illustrate heat pipes with such different cross-sections. The star-shaped cross section of FIG. 1C is a 4-point shape but other shapes may be used, e.g., 5-point shaped, 6-point shape, 7-point shape, etc. An engine/wick structure 106 (referred to herein as wick 106 and which will be discussed further herein) is included in each heat pipe 100 of FIGs. 1C-1G and illustrated having a circular cross-section. However, the wick 106 may have other cross-sectional shapes, e.g., rectangular, star, square, trapezoidal, rhomboid, hexagon, etc. In other examples, the heat pipe 100 may take the form of a rectangular or trapezoidal prism with substantially planar substrates.

As shown, the heat pipe 100 may be generally configured to transmit heat from a heat source (labeled "Hot") to a cooler end or portion (labeled "Cold"). In examples, additional heat dissipation may be provided by heat transfer to ambient environment, a cooling block, a heat sink, or any other cooling structure. In the case of an electronic device, e.g., AR/VR devices, the "Hot" end of the heat pipe 100 may in some examples be located in an internal portion of the electronic device housing, while the "Cold" end may contact or be proximate to an exterior of the electronic device housing.

In examples, heat pipe 100 comprises a RF compatible material, e.g., ceramic, polymer, or glass. Thus, such heat pipes comprise a material that does not interfere with radio signals such as radio signals that are received by and/or emanate from an antenna. In examples, the heat pipe 100 may be in the form of a hollow fiber. In examples, the heat pipe 100 comprises a polymer comprising one or more of poly(methyl methacrylate) (PMMA) based polymers, polysulfone (PSF) based polymers, azobenzene, or polytetrafluoroethylene. In some examples, the heat pipe comprises a metal and thus, such heat pipes may not be RF compatible.

In examples, the heat pipe 100 comprises a very high thermal conductivity (K) in an axial direction. In some examples, the heat pipe 100 has a thermal conductivity in a range of 1000 w/m*K to 1500 w/m*K. Generally, the thermal conductivity depends on the material of the heat pipe 100 and the size, e.g., the outside diameter of the heat pipe 100. In examples, the heat pipe 100 is transparent to RF transmissions and is optically transparent.

In examples, a charge orifice 104 as illustrated in FIG. 1A may be provided at one surface of heat pipe 100 to provide fluid access to an interior of the heat pipe 100 to introduce a working fluid and to evacuate the heat pipe to near vacuum pressure. A valve may be positioned in the charge orifice 104 to hermetically seal the charge orifice. Upon assembly of the heat pipe 100, the interior of the heat pipe may be evacuated to obtain a near vacuum (e.g., having pressure less than about 10⁻³ Torr in some examples) and a small amount of water or other working fluid (e.g., 0.1 grams to 1 gram in some examples) may be introduced into the interior of the heat pipe 100. In examples, the working fluid may be water, acetone, ammonia, glycol/water solution, dielectric coolants, alcohols, liquid nitrogen, mercury, magnesium, potassium, sodium, lithium, silver, methanol, or any combination thereof.

In examples, the heat pipe 100 may be charged with a working fluid at varying levels. In examples, charging of the working fluid may be accomplished by injecting a working fluid through at least the charge orifice. The amount of working fluid injected into the heat pipe 100 may be as desired. In examples, the heat pipe 100 is charged at 100% of its configured capacity, below 100% of its configured capacity, or above 100% of its configured capacity. In examples, the fill ratio may be set based on desired performance of the heat pipe 100. For example, undercharging the heat pipe 100 to below 100% of its configured capacity may decrease Qmax, but may improve thermal resistance. In contrast, overcharging the heat pipe to above 100% of its configured capacity may increase Qmax, but may worsen thermal resistance.

With respect to Qmax, the efficiency of a heat pipe is often dictated by its design features. A heat pipe performance may be characterized by its maximum power or heat capacity, Qmax, and by its thermal resistance. In examples, at Qmax, a partial dry out may be present in the evaporation (hot) section of the heat pipe. In examples, addressing one or more of the limits independently may lead to an improved heat pipe performance. In configurations described herein, a heat pipe 100 may have a Qmax Heat pipe configured to transfer 200-1000 milliwatts (mW) of heat per meter kelvin. Limitations on Qmax may include, capillary limit, boiling limit, vapor continuum limit, sonic limit, entrainment limit and viscous limit. Factors that influence Qmax of a heat pipe 100 may include the diameter of the heat pipe 100, the material of a wick, the working fluid used, etc.

By making the heat pipe 100 polygonal in shape, i.e., having a polygonal-shaped cross-section, the corners of the polygon promote capillary action, which improves performance relative to cylindrical heat pipes or parallel plate vapor chambers. In examples, the high energy surfaces of the heat pipe 100 meet in acute angles, which produces a capillary boost for the working fluid in the heat pipe 100.

Thus, geometries for the heat pipe 100, such as the triangle shape of the heat pipe 100 of FIG. 1A, are a focus of this application, and other geometries such as, for example, stars, squares, trapezoids, rhomboids, hexagons, or other polygons, may take advantage of the capillary boost provided by the sharp angles provided by the polygonal shapes. The capillary boost may be most pronounced with more actuate angles and thus, shapes such as triangles and star shapes may provide the most capillary boost. Thus, the heat pipe 100 (as well as heat pipes with other polygonal shapes) are described herein that have very high thermal conductivity along the length of the elongated heat pipe 100 and may efficiently transfer heat from the concentrated heat sources of an AR/VR device to a colder part of the AR/VR device, thus significantly increasing the available surface area for heat dissipation.

While this application focuses on ceramic, polymer, and glass materials, e.g., RF compatible materials, the polygonal shapes are also applicable to metal heat pipes in example configurations. However, such metal heat pipes are not necessarily RF compatible. For any material, the polygonal heat pipe 100 may be formed as separate stock sheets bonded together (welding, hermetic adhesive, glass frit, etc.). In examples, the cross section may be extruded. In other examples, the cross section may be molded or cast in one or multiple pieces and then bonded (welded/adhered) together. In the case of metal or polymer, the heat pipe 100 may alternatively be formed by bending a thin sheet into the desired cross-sectional shape and then the seam may be welded.

In some examples, the capillary boost provided by the polygonal shape of the heat pipe 100 may be sufficient that a separate wick structure is unnecessary in the heat pipe 100 and may be omitted, thereby further reducing the cost and/or complexity of the heat pipe 100. However, in some examples, it may still be beneficial to include a wick structure and thus, as can be seen in FIG. 1A, a wick structure 106 may be provided for heat pipe 100. As will be described further herein, in some cases, the wick structures or other capillary features may be formed directly on or in the planar surfaces of the heat pipe 100 itself. For instance, in the case of ceramic heat pipes, capillary features may be formed directly on the interior surface of the ceramic during or after a tape casting process. Briefly, as is known, a tape casting process may include mixing a ceramic powder and a solvent together. Binders, plasticizers, surfactants, etc., may then be added and further mixing may be performed to provide good viscosity. Homogenization may be performed to provide a homogenous mix that is pumped into a reservoir. The mix is moved from the reservoir through a doctor blade region to provide a desired thickness for a resulting substrate, which may then be dried to remove solvents. The substrate may be shaped, e.g., cut to size, bent, etc., and fired to produce ceramic portions. The capillary features may be formed in situ in the substrate or the ceramic portions prior to firing or may be formed by laser etching after the firing. The heat pipes may be formed by coupling the ceramic portions into a heat pipe body having a shape as described herein using, for example, glass fritz, metallization, etc. Additionally, or alternatively, for ceramics or other materials, capillary features may be formed on the interior surfaces by laser etching, chemical etching, deposition (e.g., vapor or plasma deposition), or any other suitable means.

Thus, as shown, the heat pipe 100 may include an engine/wick structure 106 (referred to herein as wick 106) that may include at least in part one or more features (wicking elements) such as pores, grooves, or channels formed therein by, for example, by laser ablation on the heat pipe 100. In examples, the heat pipe 100 may be made with or without a separate wick 106. In some examples, the one or more features may be formed directly on an interior surface of the heat pipe 100. In other examples, the wick 106 may be created separately and inserted into the heat pipe 100. In some examples, the interior surfaces of the heat pipe 100 may have the necessary capillary action, hydrophilic and/or hydrophobic properties such that a separate a separate wick 106 is not needed.

In examples, the wick 106 may be created separately and inserted into the heat pipe 100. In some examples, the wick 106 comprises one or more of copper, copper alloy, titanium, titanium alloy, carbon, polymer, glass, ceramic, or a composite structure. In particular, in some examples, the wick 106 may comprise metal (e.g., copper) in the form of foil, wire, or mesh. In other examples, the wick 106 may comprise polymer, e.g., polyester, or cellulose. In examples, the wick 106 may be solid, porous (micro pores formed in the wick material), a rolled sheet (with space between layers of the roll), or a hollow tube (microporous tube). Once the wick 106 is inserted in the heat pipe 100, the ends of the heat pipe 100 may closed by, for example, a laser weld. The ends of wick 106 may be closed by, for example, pinching and welding the ends, depending on the material, e.g., metal. The ends of the wick 106 may be closed by, for example, a laser weld depending on the material, e.g., glass, ceramic, polymer, etc.

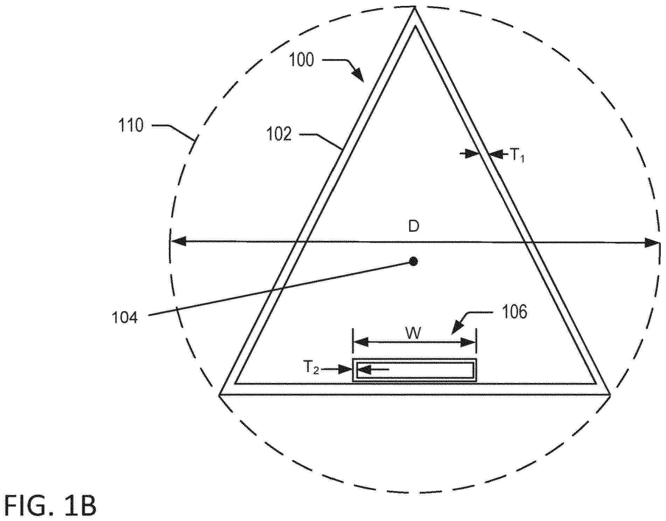

As can be seen in FIG. 1B, which is a cross section of the heat pipe 100 taken along the line B-B in FIG. 1A, in examples in which the heat pipe 100 includes a triangular cross section, e.g., has an elongated triangular body 102, a diameter D of a circle 110 surrounding the heat pipe 100 may be in a range of 800-1200 microns. In some examples, the body 102 may have a wall thickness T₁ in a range of 75 to 100 microns. In examples, the wick 106 may include a rectangular structure having an outer width W in a range of 100-200 microns and a height H in a range of 25 to 100 microns. In examples, the height may exceed 100 microns depending on power dissipation levels, i.e., Qmax. In other examples, the wick 106 may have a circular or cylindrical cross section, or any other cross-sectional shape. In some examples, the wick 106 may be hollow, in which case the wick 106 may have a wall thickness T₂ in a range of 8 to 17 microns. In some examples, the wick 106 or the walls thereof (in the case of a hollow wick structure) may be porous to facilitation wicking or migration of the liquid.

When assembling the heat pipe 100 by inserting the wick 106, it is important to avoid scratching the interior of the heat pipe 100. This may be accomplished by coating the interior of the heat pipe 100 with sol gel, sintered powder, electroplating, etc. to protect interior of the glass. In examples, a liner may be extruded, e.g., polymer, which may be inserted inside the heat pipe 100. In examples, a soft wick 106 that does not scratch, e.g., a polymer wick, may be created and inserted into the heat pipe 100. In examples, a single wick 106 may be used in the heat pipe 100. In some examples, multiple smaller wicks may be used in the heat pipe 100.

The configuration (e.g., size, shape, and relative spacing) of the grooves or channels in the wick 106 may depend on the desired heat transfer characteristics of the heat pipe 100 and the working fluid to be used. In some examples, the configuration of the grooves or channels may be selected to tune the performance of the heat pipe 100 for a given application. In examples, the one or more features such as grooves to channels may be designed to flow the working fluid between the condensation or "Cold" end of the heat pipe 100 and the evaporation or "Hot" end of the heat pipe 100.

In examples, one or more features may be formed only over a portion of the wick 106. In examples, one or more features may be formed over the whole surface of the wick 106. In examples, one or more features may be formed to extend along the full length of a surface of the wick 106. In examples, one or more features may be formed to extend only partially along a length of a surface of the wick 106. In examples, one or more features may extend partially along the length of a surface of the wick 106 and other one or more features may extend along the full length of the surface of the wick 106.

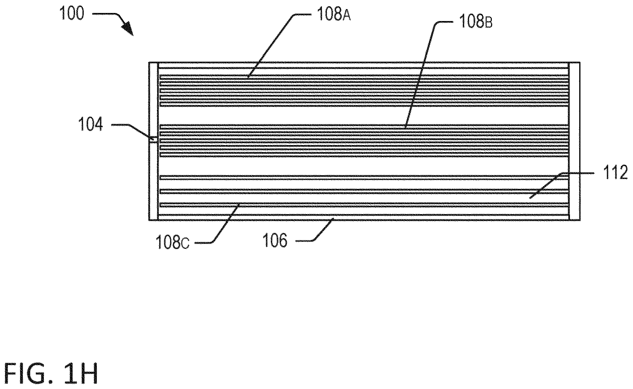

FIG. 1H is a cross sectional view of the wick 106 of heat pipe 100 taken along line H-H in FIG. 1A. In examples, as illustrated in FIG. 1H, one or more features may be formed to extend on the surface of wick 106 from one edge or end to the opposite edge or end. Illustrated in FIG. 1H the one or more features are shown as grooves or channels 108A, 108B, and 108C within the wick 106 that extend a length of the heat pipe 100. As previously noted, in some examples, the one or more features may be formed directly on an interior surface of the heat pipe 100. In other examples, the wick 106 may be created separately and inserted into the glass fiber heat pipe 100.

In examples, the fine features, e.g., grooves or channels 108A, 108B, and 108C may lead to a heat pipe with high performance. In examples, the dimensions, spacing, and/or geometry of the grooves or channels may affect the tendency of the working fluid to condense and/or may affect the capillary action of the grooves or channels.

In examples, any desired feature pattern may be formed. In examples, all grooves or channels formed may have the same shape, and profile dimensions. In the illustrated example, the grooves or channels 108A, 108B, and 108C are shown as being different heights/depths, spacings/pitches, and/or geometry. In some examples, the grooves or channels may be homogenous throughout the interior of the heat pipe 100 or may vary throughout the interior of the heat pipe 100, depending on the desired performance. In examples, the grooves formed may have different shapes and/or profile dimensions. In examples, a first groove may have the same or different depth than at least one second groove. In examples, a first groove may have the same or different shape and/or profile than at least one second groove. In examples, a groove shape may be a U-shape, a V-shape, or a squared shape. In examples, a groove or channel may have perpendicular or slanted sidewalls. In examples, a groove or channel may be free of undercut.

In examples, the surface of a feature or portion of a feature may be smooth or rough. For example, the surface of a groove or channel sidewalls and/or groove or channel bottom portion formed by laser ablation may be smooth or rough. In examples, one or more surfaces of a feature may be the same or different from one or more other surfaces of the feature. For example, the surface of a groove or channel sidewalls formed by the laser ablation may have the same or different characteristics than the groove or channel bottom portion that was also formed by laser ablation.

In examples, the surface 112 between features such as between grooves or channels 108A, 108B, and 108C may be flat, curved, smooth, rough, or any combination thereof. In examples, the surface 112 between features may be flat.

In examples, the profile of a feature may have any desired size. In examples, a groove or channel may be formed of any desired width and depth. In examples, a groove or channel may have a flat bottom portion and two sidewalls extending vertically from the bottom portion. In examples, the sidewalls may be perpendicular to the bottom portion. In examples, the sidewalls may be non-perpendicular to the bottom portion. In examples, the width of a feature such as groove or channel, as measured at the surface of the bottom portion may be in the range of about 10 µm to 200 µm. In examples, the width of a features such as a groove or channel, measured at the surface of the bottom portion of the groove or channel, may be about 50 µm. In examples, the width of a feature such as a groove or channel, measured at the surface of the bottom portion of the groove or channel may be about 10 µm, 20 µm, 30 µm, 40 µm, 50 µm, 60 µm, 70 µm, 80 µm, 90 µm, 100 µm, 125 µm, 150 µm, 175 µm, 200 µm, or within a range defined by any two of these examples.

In examples, the depth of a features such as a groove or channel, measured from where the sidewall of the groove or channel meets the bottom portion of the groove or channel to the opposite, top end of a groove or channel sidewall may be in the range of about 10 µm to 200 µm. In examples, the depth of a feature such as a groove or channel, measured from where the sidewall of the groove or channel meets the bottom portion of the groove or channel to the opposite, top end of a groove or channel sidewall may be about 50 µm. In examples, the depth of a feature such as a groove or channel, measured from where the sidewall of the groove or channel meets the bottom portion of the groove or channel to the opposite, top end of a groove or channel sidewall may be about 10 µm, 20 µm, 30 µm, 40 µm, 50 µm, 60 µm, 70 µm, 80 µm, 90 µm, 100 µm, 125 µm, 150 µm, 175 µm, 200 µm, or within a range defined by any two of these examples.

In examples, the feature pitch, or spacing measured at the surface 112 of the wick 106 between features such as groove or channels can be of any desired size. In examples, the feature pitch of the grooves or channels may be within range of about 10 µm to 200 µm. In examples, the feature pitch may be about 50 µm. In examples, the feature pitch may be about 10 µm, 20 µm, 30 µm, 40 µm, 50 µm, 60 µm, 70 µm, 80 µm, 90 µm, 100 µm, 125 µm, 150 µm, 175 µm, 200 µm, or within a range defined by any two of these examples.

In examples, the width, depth, and pitch of any one feature may be the same or different from that of another feature. In examples, the groove or channel width, depth, and pitch may be all the same. For example, the groove or channel width, depth, and pitch may each be 50 µm. In examples, at least two of the groove or channel width, depth, and pitch may be different from each other.

In examples, the roughness of the surface of at least a portion of a feature formed by laser ablation may be in the range of about 3 µm to 10 µm. In examples, post laser ablation the roughness of the surface of at least a portion of a feature may be in the range of 1/10 to 1/5 of the feature dimensions. For examples, in examples where the groove or channel has a width as defined above of about 50 µm, the roughness at the surface of the bottom portion of the groove or channel may be within the range of 5 µm to 10 µm. In examples, the roughness of the surface of at least a portion of a feature achieved with laser ablation may be in the range of 3 µm to 5 µm.

In examples, by employing laser ablation as described, it may be possible to achieve more accurate feature patterning than by way of wet etching. Also, in examples, the laser ablation may avoid undercut for example where the sidewalls of a groove or channel meet the surface of the bottom portion of the groove or channel. In examples, using laser ablation it may be possible to more easily adjust a feature depth. For example, the depth of a groove or channel may be more easily adjusted using laser than wet etching. In examples, by laser ablation it may be possible to efficiently form feature, such as groove or channels, of varying depths, widths, and shapes on a substrate. This may lead to more design flexibility that may allow a manufacturer to achieve an effective design for a particular heat pipe.

In examples, as described earlier, the design and shape of a feature such as a groove or channel on a substrate may materially affect the capillary limit and thin film evaporation. Accordingly, design flexibility provided by the laser ablation process as described, may result in a heat pipe with improved functionality as compared to a device formed by wet etching.

In examples, the surface roughness between the one or more features patterned thereon may be further modified after laser ablation to improve capillary limit.

In examples, the laser ablated surface may optionally be exposed to a caustic solution to achieve microetching and further increase surface roughness if desired. In examples, the caustic solution may include hydrofluoric acid, potassium hydroxide or the like. In examples, the process may be carried out at room temperature for about 20 min to 40 min. In examples, exposure to a caustic solution may result in increased roughness by about 1 µm to 2 µm. In examples, the caustic solution process is omitted so as to avoid the employment of one or more polluting chemicals.

Upon assembly of the heat pipe 100, the interior of the heat pipe may be evacuated to obtain a near vacuum (e.g., having pressure less than about 10⁻³ Torr in some examples). In examples, a small amount of water or other working fluid (e.g., 0.1 grams to 1 gram in some examples) may be introduced into the interior of the heat pipe. In examples, the working fluid may be introduced after the heat pipe has been evacuated to near vacuum.

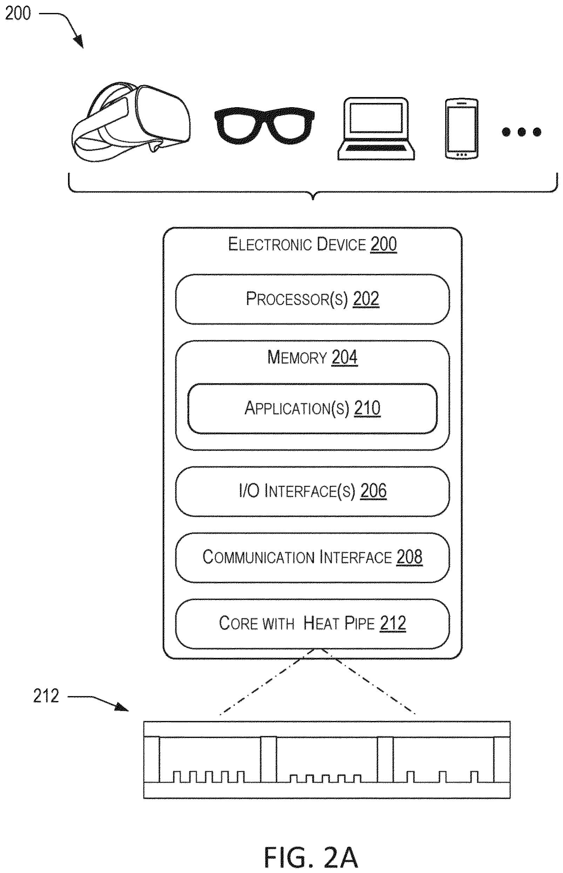

FIG. 2A schematically illustrates an example electronic device 200 in which a heat pipe, e.g., heat pipe 100 of FIGs. 1A-1H, as manufactured in accordance with the description provided herein, may be employed. The electronic device 200 may be representative of a wearable device that includes one or more electronic components, e.g., a head-mounted device such as an extended reality visor or glasses, a laptop computer, a mobile device such as a tablet or mobile phone, or any other electronic device such as those described throughout this application. As shown, the electronic device 200 includes one or more electronic components such as processors 202, memory 204, input/output interfaces 206 (or "I/O interfaces 206"), and communication interfaces 208, which may be communicatively coupled to one another by way of a communication infrastructure (e.g., a bus, traces, wires, etc.). While the electronic device 200 is shown in FIG. 2A having a particular configuration, the components illustrated in FIG. 2A are not intended to be limiting. The various components can be rearranged, combined, and/or omitted depending on the requirements for a particular application or function. Additional or alternative components may be used in other examples.

In some examples, the processor(s) 202 may include hardware for executing instructions, such as those making up a computer program or application. For example, to execute instructions, the processor(s) 202 may retrieve (or fetch) the instructions from an internal register, an internal cache, the memory 204, or other computer-readable media, and decode and execute them. By way of example and not limitation, the processor(s) 202 may comprise one or more central processing units (CPUs), graphics processing units (GPUs), holographic processing units, microprocessors, microcontrollers, integrated circuits, programmable gate arrays, or other hardware components usable to execute instructions.

The memory 204 is an example of computer-readable media and is communicatively coupled to the processor(s) 202 for storing data, metadata, and programs for execution by the processor(s) 202. In some examples, the memory 204 may constitute non-transitory computer-readable media such as one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 204 may include multiple instances of memory, and may include internal and/or distributed memory. The memory 204 may include removable and/or non-removable storage. The memory 204 may additionally or alternatively include one or more hard disk drives (HDDs), flash memory, Universal Serial Bus (USB) drives, or a combination these or other storage devices.

As shown, the electronic device 200 includes one or more I/O interfaces 206, which are provided to allow a user to provide input to (such as touch inputs, gesture inputs, keystrokes, voice inputs, etc.), receive output from, and otherwise transfer data to and from the electronic device 200. Depending on the particular configuration and function of the electronic device 200, the I/O interface(s) 206 may include one or more input interfaces such as keyboards or keypads, mice, styluses, touch screens, cameras, microphones, accelerometers, gyroscopes, inertial measurement units, optical scanners, other sensors, controllers (e.g., handheld controllers, remote controls, gaming controllers, etc.), network interfaces, modems, other known I/O devices or a combination of such I/O interface(s) 206. Touch screens, when included, may be activated with a stylus, finger, thumb, or other object. The I/O interface(s) 206 may also include one or more output interfaces for presenting output to a user, including, but not limited to, a graphics engine, a display (e.g., a display screen, projector, holographic display, etc.), one or more output drivers (e.g., display drivers), one or more audio speakers, and one or more audio drivers. In certain examples, I/O interface(s) 206 are configured to provide graphical data to a display for presentation to a user. The graphical data may be representative of one or more graphical user interfaces and/or any other graphical content as may serve a particular implementation. By way of example, the I/O interface(s) 206 may include or be included in a wearable device, such as a head-mounted display (e.g., headset, glasses, helmet, visor, etc.), a suit, gloves, a watch, or any combination of these, a handheld electronic device (e.g., tablet, phone, handheld gaming device, etc.), a portable electronic device (e.g., laptop), or a stationary electronic device (e.g., desktop computer, television, set top box, a vehicle electronic device). In some examples, the I/O interface(s) 206 may be configured to provide an extended reality environment or other computer-generated environment.

The electronic device 200 may also include one or more communication interface(s) 208. The communication interface(s) 208 can include hardware, software, or both. In examples, communication interface(s) 208 may provide one or more interfaces for physical and/or logical communication (such as, for example, packet-based communication) between the electronic device 200 and one or more other electronic devices or one or more networks. As an example, and not by way of limitation, the communication interface(s) 208 may include a network interface controller (NIC) or network adapter for communicating with an Ethernet or other wire-based network and/or a wireless NIC (WNIC) or wireless adapter for communicating with a wireless network, such as a WI-FI adapter. In examples, communication interface(s) 208 can additionally include a bus, which can include hardware (e.g., wires, traces, radios, etc.), software, or both that communicatively couple components of electronic device 200 to each other. In examples, the electronic device 200 may include additional or alternative components that are not shown, such as, but not limited to, a power supply (e.g., batteries, capacitors, etc.), a housing or other enclosure to at least partially house or enclose the chassis and/or any or all of the components.

The memory 204 may store one or more applications 210, which may include, among other things, an operating system (OS), productivity applications (e.g., word processing applications), communication applications (e.g., email, messaging, social networking applications, etc.), games, or the like. The application(s) 210 may be implemented as one or more stand-alone applications, as one or more modules of an application, as one or more plug-ins, as one or more library functions application programming interfaces (APIs) that may be called by other applications, and/or as a cloud-computing model. The application(s) 210 can include local applications configured to be executed locally on the electronic device, one or more web-based applications hosted on a remote server, and/or as one or more mobile device applications or "apps."

In examples, the electronic device 200 may also include a core 212 including one or more heat pipes to which the other electronic components such as the processor(s) 202, memory 204, I/O interface(s) 206, and/or communication interface(s) 208 can be coupled. In examples, the heat pipe may be formed integrally with the core 212 and may be configured to dissipate and/or spread heat generated by the one or more other components.

In examples, the heat pipe of the core 212 can be made according to the techniques described herein and may be configured to exhibit manufacturing tolerances suitable for mounting precision optical components (e.g., lenses, display screens, mirrors, gratings, optical fibers, light pipes, etc.).

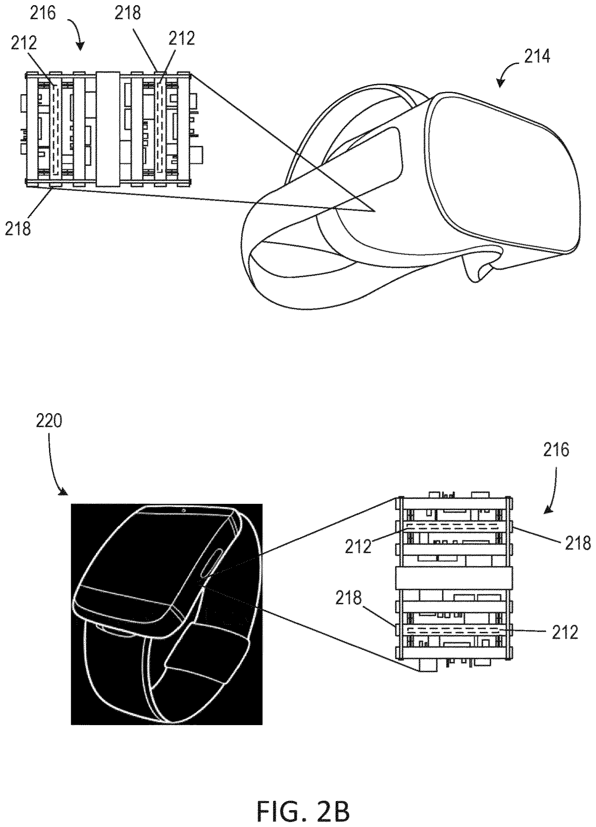

FIG. 2B schematically illustrates an example of an electronic device in the form of an AR or VR headset 214 that includes a stack-printed circuit board (PCB) architecture 216 in which one or more tri-layer structures including two interposers 218 equipped with a core 212 including one or more heat pipes as described herein are provided. The example stack PCB architecture 216 may provide and/or include one or more of the electronic components such as processors 202, memory 204, I/O interfaces 206, and communication interfaces 208. The stack-PCB architecture 216 is simply an example implementation for illustrative purposes.

FIG. 2B also schematically illustrates an example of an electronic device in the form of a watch 220 that includes a stack-PCB architecture 216 in which one or more tri-layer structures including two interposers 218 equipped with a core 212 including one or more heat pipes as described herein are provided. The example stack PCB architecture 216 may provide and/or include one or more of the electronic components such as processors 202, memory 204, I/O interfaces 206, and communication interfaces 208. The stack-PCB architecture 216 is simply an example implementation for illustrative purposes.

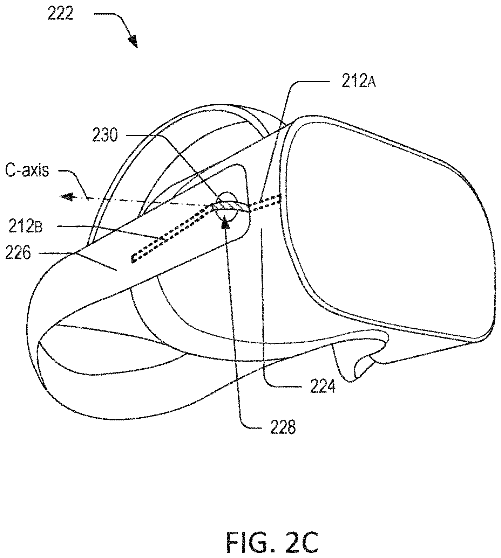

FIG. 2C schematically illustrates another example of an electronic device in the form of an AR or VR headset 222 that includes one or more cores 212 including one or more heat pipes as described herein. The AR or VR headset 222 may include an articulated portion or strap. In examples, the AR or VR headset 222 may include a first portion 224 and a second portion 226. In examples, first portion 224 may be a frame portion of the AR or VR headset 222. In examples, second portion 226 may be a side or temple arm of AR or VR headset 222, such as for example a strap. In examples, an articulation region 228 may be provided between the first portion 224 and the second portion 226 and configured to provide a mechanical articulation between the first portion 224 and the second portion 226. In examples, the articulation region 228 may allow for a pivoting motion of second portion 226 about a central axis (C-axis) perpendicular to the first portion 224. In some examples, the articulation region 228 may include a coupler, such as a memory material coupler 230 that is configured to couple a first core 212a and a second core 212b.

As shown, in examples, the first core 212a may be provided in first portion 224 and the second core 212b may be provided in second portion 226. In examples, a third core (not shown) may be provided within first portion 224, second portion 226, and/or articulation region 228. In examples, the AR or VR headset 214 of FIG. 2B may include some or all of the components described with respect to the AR or VR headset 222 of FIG. 2C.

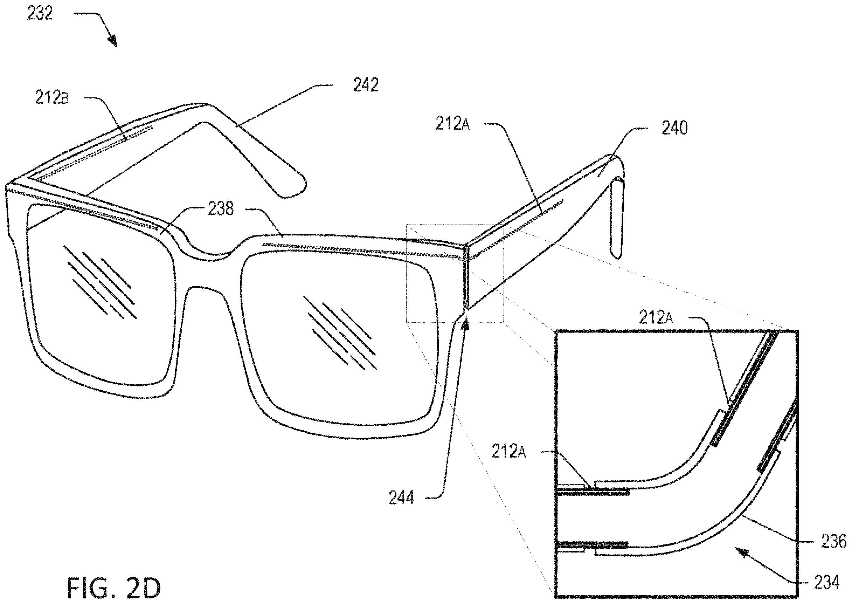

FIG. 2D schematically illustrates an example of an electronic device in the form of AR glasses 232 that includes a hinge 234 (e.g., a flexible adapter hinge) including a memory material coupler 236. In examples, two cores 212a, 212b including one or more heat pipes as described herein are provided. The two cores 212a, 212b may be arranged in the AR glasses 232 such that a first core portion of the cores 212a, 212b may be provided at a first elongated and/or planar portion 238 (e.g., a frame or portion of a frame) of the AR glasses 232, and a second core portion of the cores 212a, 212b may be provided at a second elongated and/or planar portion 240, 242, respectively, (e.g., a temple or portion of a temple) of the AR glasses 232. The hinge 234 or mechanical articulation may be provided between the first core portion of cores 212a, 212b and the second core portion of cores 212a, 212b. The first core portion and the second core portion may be coupled or connected via the memory material coupler 236 located within the hinge 234 of the AR glasses 232. In examples, the memory material coupler 236 may be configured to mechanically articulate the pivoting, swinging, and/or rotation of the first elongated and/or planar portion 238 with respect to the second elongated and/or planar portions 240, 242.

In examples, the memory material coupler 236 may be positioned within a hinge, curved area, or articulation region so that substantially all of the bending occurs at the memory material coupler 236 and not at the first core portion or the second core portion. In examples, the memory material coupler 236 may be coupled at least partially to a housing of the AR glasses 232. In examples, the first core portion may be at least partially coupled to a frame of the AR glasses 232 and the second core portion may be at least partially coupled to a temple of the AR glasses 232.

Although as illustrated in FIGs. 2C and 2D an electronic device includes a core 212 extending across a mechanical articulation area or hinge, in examples, two or more cores 212 may be connected to each other.

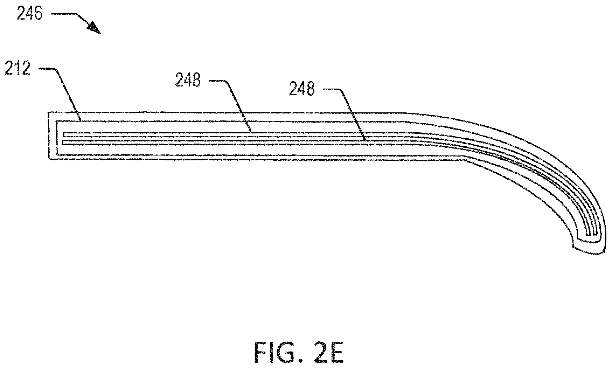

Referring to FIG. 2E, an example of a temple arm 246 of, for example, AR glasses 232 is illustrated. The temple arm 246 includes a core 212, that includes one or more heat pipes 248 as described herein. The core 212 is shaped to fit the temple arm 246. In the example of FIG. 2E, the core 212 is located at an outer portion of the arm 246, e.g., the portion of the arm 246 that is not adjacent to a user's head.

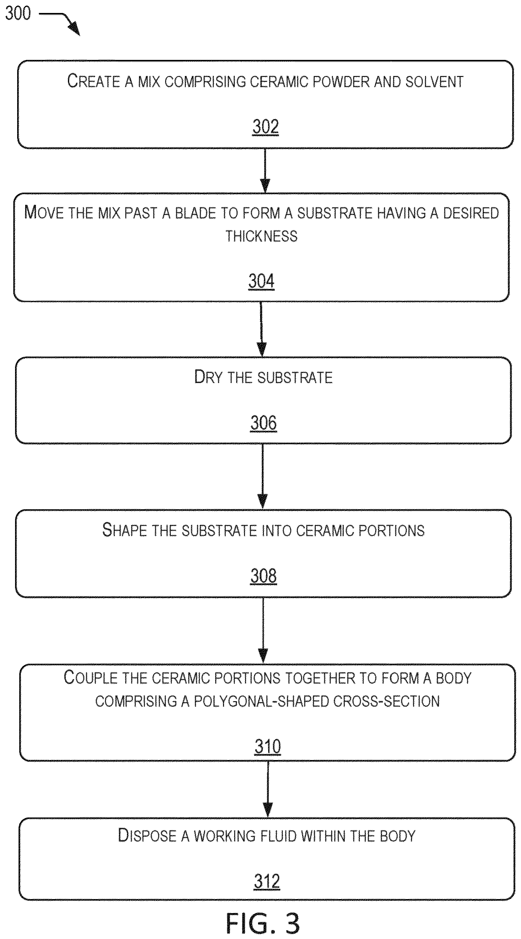

FIG. 3 illustrates a flow diagram of an example method 300 that illustrates aspects of techniques as described herein. It should be appreciated that more or fewer operations might be performed than shown in FIG. 3 and described herein. These operations can also be performed in parallel, or in a different order than those described herein.

FIG. 3 schematically illustrates an example method 300 of manufacturing a ceramic heat pipe, e.g., heat pipe 100 comprising a body comprising a polygonal-shaped cross-section.

At 302, a mix comprising ceramic powder and solvent is created. In configurations, the mix may further comprise one or more binders, plasticizers, surfactants, etc.

At 304, the mix is moved past a blade to form a substrate having a desired thickness. At 306, the substrate is dried.

At 308, the substrate is shaped into ceramic portions. For example, the substrate may be cut to size, bent, etc.

At 310, the ceramic portions are coupled together to form a body comprising a polygonal-shaped cross-section. By making the heat pipe polygonal in shape, i.e., having a polygonal-shaped cross-section, the corners of the polygon promote capillary action, which improves performance relative to cylindrical heat pipes or parallel plate vapor chambers. In examples, the high energy surfaces of the heat pipe meet in acute angles, which produces a capillary boost for the working fluid in the heat pipe.

Thus, geometries for the heat pipe, such as the triangle shape of the heat pipe 100 of FIG. 1A, are a focus of this application, and other geometries such as, for example, stars, squares, trapezoids, rhomboids, hexagons, or other polygons, may take advantage of the capillary boost provided by the sharp angles provided by the polygonal shapes. The capillary boost may be most pronounced with more actuate angles and thus, shapes such as triangles and star shapes may provide the most capillary boost. Thus, the heat pipe 100 (as well as heat pipes with other polygonal shapes) are described herein that have very high thermal conductivity along the length of the elongated heat pipe 100 and may efficiently transfer heat from the concentrated heat sources of an AR/VR device to a colder part of the AR/VR device, thus significantly increasing the available surface area for heat dissipation.

While this application focuses on ceramic, polymer, and glass materials, e.g., RF compatible materials, the polygonal shapes are also applicable to metal heat pipes in example configurations. However, such metal heat pipes are not necessarily RF compatible. For any material, the polygonal heat pipe 100 may be formed as separate stock sheets bonded together (welding, hermetic adhesive, glass frit, etc.). In examples, the cross section may be extruded. In other examples, the cross section may be molded or cast in one or multiple pieces and then bonded (welded/adhered) together. In the case of metal or polymer, the heat pipe 100 may alternatively be formed by bending a thin sheet into the desired cross-sectional shape and then the seam may be welded.

At 312, a working fluid is disposed within the body. For example, a working fluid is disposed within the body of heat pipe 100. The working fluid may comprise water, acetone, ammonia, glycol/water solution, dielectric coolants, alcohols, liquid nitrogen, mercury, magnesium, potassium, sodium, lithium, silver, methanol, or any combination thereof.

Although the discussion above sets forth example implementations of the described techniques, other architectures may be used to implement the described functionality and are intended to be within the scope of this disclosure.

Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A heat pipe comprising:
a body comprising a polygonal-shaped cross-section, wherein the body comprises a radio frequency (RF) compatible material comprising one of ceramic, polymer, or glass; and
a working fluid disposed within the body.

2. The heat pipe of claim 1, wherein a diameter of a circle circumscribing the body is in a range of 800 to 1200 microns.

3. The heat pipe of claim 1 or 2, the RF compatible material comprises a polymer comprising one or more of poly(methyl methacrylate) (PMMA) based polymers, polysulfone (PSF) based polymers, azobenzene, or polytetrafluoroethylene.

4. The heat pipe of any preceding claim, wherein the body is at least one of (i) transparent to radio frequency (RF) transmissions or (ii) optically transparent.

5. The heat pipe of any preceding claim, wherein surfaces of the body meet in acute angles;
preferably wherein the body comprises one of a triangular cross-section, a star-shaped cross-section, a square-shaped cross section, a trapezoidal cross-section, a rhomboid-shaped cross-section, or a hexagonal cross-section.

6. The heat pipe of any preceding claim, wherein the working fluid comprises at least one of water, acetone, ammonia, glycol/water solution, dielectric coolants, alcohol, liquid nitrogen, mercury, magnesium, potassium, sodium, lithium, silver, or methanol.

7. A wearable device comprising one or more electronic components, wherein the one or more electronic components include at least one heat pipe, wherein the at least one heat pipe comprises:
a body comprising a polygonal-shaped cross-section; and
a working fluid disposed within the body.

8. The wearable device of claim 7, wherein a diameter of a circle circumscribing the body is in a range of 800 to 1200 microns.

9. The wearable device of claim 7 or 8, wherein the body comprises a radio frequency (RF) compatible material.

10. The wearable device of any of claims 7 to 9, wherein the RF compatible material comprises one of ceramic, polymer, or glass;
preferably wherein the RF compatible material comprises a polymer comprising one or more of poly(methyl methacrylate) (PMMA) based polymers, polysulfone (PSF) based polymers, azobenzene, or polytetrafluoroethylene.

11. The wearable device of any of claims 7 to 10, wherein the body is at least one of (i) transparent to radio frequency (RF) transmissions or (ii) optically transparent.

12. The wearable device of any of claims 7 to 11, wherein surfaces of the body meet in acute angles;
preferably wherein the body comprises one of a triangular cross-section, a star-shaped cross-section, a square-shaped cross section, a trapezoidal cross-section, a rhomboid-shaped cross-section, or a hexagonal cross-section.

13. The wearable device of any of claims 7 to 12, wherein the wearable device comprises one of augmented reality (AR) glasses, an AR headset, a virtual reality (VR) headset, and a watch.

14. The wearable device of claim 13, wherein:
the wearable device comprises AR glasses and the heat pipe is located in temple arms of the AR glasses;
the wearable device comprises an AR headset and the heat pipe is located in a frame of the AR headset; or
the wearable device comprises a VR headset and the heat pipe is located in one or
more of a visor of the VR headset, a stack-printed circuit board (PCB) architecture of the VR headset, or one or more optical assemblies of the VR headset.

15. A method of making a heat pipe, the method comprising:
forming a body comprising a polygonal-shaped cross-section wherein the body comprises a radio frequency (RF) compatible material comprising one of ceramic, polymer, or glass; and
disposing a working fluid within the body.
